Europäisches Patentamt

European Patent Office

Office européen des brevets

(11) Veröffentlichungsnummer: **0 190 381**
**A1**

(12) **EUROPÄISCHE PATENTANMELDUNG**

(21) Anmeldenummer: 85101210.4

(22) Anmeldetag: 06.02.85

(51) Int. Cl.⁴: **B 23 H 1/02**

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: AEG - Elotherm GmbH
Hammesberger Strasse 31
D-5630 Remscheid-Hasten(DE)

(72) Erfinder: Hassan, Mouhammed
Feldstrasse 16
D-5620 Velbert 11(DE)

(72) Erfinder: Paschke, Horst
Oberstrasse 20
D-4300 Essen 1(DE)

(74) Vertreter: Patentanwaltsbüro Cohausz & Florack
Schumannstrasse 97
D-4000 Düsseldorf 1(DE)

(54) Elektrischer Generator für die funkenerosive Metallbearbeitung.

(57) Die Erfindung bezieht sich auf einen elektrischen Generator für die funkenerosive Metallbearbeitung. Zur Verbesserung des Wirkungsgrades des Generators und zum Zwecke eines frei wählbaren Stromverlaufs im Arbeitsspalt ist im Stromkreis des Arbeitsspaltes eine Induktivität (Leitungsinduktivität) (7) und in Reihe dazu ein elektrischer Schalter (2) angeordnet, mit dem die Speisespannung getriggert wird. Über das Tastverhältnis läßt sich im Arbeitsspalt (8) jeder gewünschte Stromverlauf und damit auch eine Begrenzung des Stromes ohne leistungsverzehrenden Vorwiderstand erreichen.

Fig.1

EP 0 190 381 A1

# COHAUSZ & FLORACK    0190381

## PATENTANWALTSBÜRO

### SCHUMANNSTR. 97  D-4000 DÜSSELDORF 1

Telefon. (02 11) 68 33 46                    Telex: 0858 6513 cop d

---

PATENTANWALTE:

Dipl.-Ing W. COHAUSZ  ·  Dipl.-Ing. R. KNAUF  ·  Dipl.-Ing. H. B. COHAUSZ  ·  Dipl.-Ing. D. H. WERNER

---

AEG-Elotherm GmbH                05. Februar 1985

Hammesberger Straße 31

5630 Remscheid-Hasten

Elektrischer Generator für die funkenerosive
Metallbearbeitung

---

Die Erfindung bezieht sich auf einen elektrischen Generator für die funkenerosive Metallbearbeitung, bestehend aus einer Gleichstromquelle und einer Strombegrenzungsschaltung, die aus einer in Reihe mit dem Arbeitsspalt und einem steuerbaren Schalter liegenden Induktivität sowie einer parallel zu dieser Induktivität und dem Arbeitsspalt liegenden Freilaufdiode besteht, wobei der Schalter von einer Steuereinrichtung derart getriggert wird, daß sich ein vorgegebener Stromverlauf im Arbeitsspalt einstellt.

Bei den meisten heute benutzten elektrischen Generatoren für die funkenerosive Metallbearbeitung wird der über den Arbeitsspalt fließende Strom durch einen steuerbaren Vorschaltwiderstand begrenzt. Der

83/609 EP  K/Wa/Sr

durch den Leistungsverlust im Vorschaltwiderstand verursachte schlechte Wirkungsgrad ist von der Fachwelt erkannt worden. Um den Wirkungsgrad zu verbessern, ist bei einem bekannten Generator zwischen der einen pulsierenden Gleichstrom liefernden Leistungsstufe und dem Arbeitsspalt ein Sperrwandler angeordnet. In einer ersten Zeitphase wird dem Sperrwandler elektrische Leistung zugeführt. Nach Zündung des Funkens im Arbeitsspalt wird diese elektrische Leistung in einer nachfolgenden Phase vom Sperrwandler an den Arbeitsspalt abgegeben. Der Strom im Arbeitsspalt hat deshalb einen sägezahnförmigen Verlauf. Eine Veränderung des prinzipiellen Verlaufs des Stromes ist nicht vorgesehen (DE-OS 3 129 265).

Bei einem anderen bekannten Generator zur funkenerosiven Metallbearbeitung kann der Verlauf des Stromes im Arbeitsspalt einen gewünschten Verlauf haben. Der Verlauf des Stromes wird durch besondere Schaltungsmaßnahmen bestimmt, die Hüllkurven erzeugen, zwischen denen der Strom im Arbeitsspalt verläuft. Der dafür erforderliche schaltungstechnische Aufwand ist groß (DE-OS 2 547 767).

Darüberhinaus ist ein elektrischer Generator für die funkenerosive Metallbearbeitung bekannt, bei dem über einen Schalter eine Reihenschaltung aus einer Induktivität und dem arbeitsspalt angeschlossen ist, wobei parallel zu der Induktivität und dem Arbeitsspalt eine Freilaufdiode liegt. Die Induktivität wird von der Primärwicklung eines Transformators gebildet, deren Sekundärwicklung an einer Polarisationsstromquelle liegt. Durch diesen zusätzlichen Stromkreis mit der Polarisationsstromquelle läßt sich die im Hauptstromkreis liegende Induktivität vormagnetisieren, so daß bei Anschalten des Stroms im Hauptstromkreis der Strom sprunghaft bis auf den der Endsättigung nötigen Stromwert ansteigt, um danach nur noch allmählich linear anzusteigen, bis daß der Schalter geöffnet wird. Danach fällt der Strom wieder bis auf den Sättigungswert linear ab, um dann sprunghaft erneuert zu werden. Diese Art der Beeinflussung der Stromform im Arbeitsspalt ist nicht nur sehr beschränkt, sondern auch schaltungstechnisch aufwendig (DE-AS 13 01 698).

Bei einem bekannten Generator der eingangs genannten Art dient die Induktivität zusammen mit einem den Arbeitsspalt kurzschließenden zusätzlichen Schalter dazu, die für den Arbeitsspalt erforderliche Zündspannung zu erzeugen und den Stromfluß über den Arbeitsspalt zu steuern. Während in einer ersten Phase bei kurzgeschlossenem Schalter nach einer vorgegebenen Stromkurve die Induktivität mit magnetischer Energie geladen wird, erfolgt in der zweiten Phase nach Öffnen des kurzgeschlossenen Schalters die Entladung über den Arbeitsspalt. Von Nachteil ist bei dieser Schaltung, daß der für die Entladung der Induktivität und damit für die Steuerung des Stromflusses über den Arbeitsspalt verantwortliche Schalter in Verbindung mit der als magnetischer Energiespeicher dienenden diskreten Induktivität induktivitätsarme Zuleitungen zum Arbeitsspalt erforderlich macht, denn nur bei induktivitätsarmen Zuleitungen ist es möglich, die Zündspannung ungedämpft am Arbeitsspalt wirksam werden zu lassen und den Strom abschalten zu können, ohne daß ein nichtkontrolliertes Nachschließen des Stroms auftritt. In der Praxis lassen sich solche induktivitätsarmen Leitungen aber kaum verwirklichen. Eine denkbare Lösungsmöglichkeit bestünde darin, den kurzschließenden Schalter unmittelbar an den Anschlüssen des Arbeitsspaltes anzuschließen, was
jedoch aus praktischen Gründen kaum möglich ist
(DE-OS 28 24 086).

Ausgehend von diesem Stand der Technik liegt der Erfindung die Aufgabe zugrunde, einen elektrischen Generator für die funkenerosive Metallbearbeitung zu
schaffen, der bei einfachem Schaltungsaufbau die
Einstellung des Stromverlaufs im Arbeitsspalt ermöglicht. Diese Aufgabe wird erfindungsgemäß dadurch
gelöst, daß die Induktivität von der Induktivität
der Stromzuleitungen gebildet ist und der Schalter
als Hochfrequenzschalter ausgebildet ist.

Im Gegensatz zum gesamten Stand der Technik wird
bei der Erfindung keine diskrete Induktivität benötigt,
vielmehr wird die Induktivität der Zuleitungen in
Verbindung mit dem Hochfrequenzschalter ausgenutzt,
um jede gewünschte Stromform des dem Arbeitsspalt zuzuführenden Stromes einzustellen. Insbesondere läßt sich
wegen der verhältnismäßig kleinen Leitunginduktivität
eine steile Anstiegs- und Abfallflanke des Stromes
erzielen. Die Ausnutzung der Leitungsinduktivität vermindert demnach nicht nur den schaltungstechnischen
Aufwand. wegen des Fortfalls der diskreten Induktivität, sondern erweitert darüberhinaus noch den Anstellbereich. Auch werden kein zweiter kurzschließender Schalter zur Steuerung des Stromflusses über den
Arbeitsspalt und induktivitätsarme Zuleitungen zu dem
Arbeitsspalt benötigt.

Durch die Wahl der Schaltfrequenz, des Tastverhältnisses und der Tastverhältniszonen läßt sich jeder
gewünschte Stromverlauf einstellen. Wird zu Beginn eines Arbeitsstromimpulses ein schneller Stromanstieg gewünscht, wird man ein großes Tastverhältnis (Ein-Ausschaltzustand) des HF-Schalters wählen. Umgekehrt wird das Tastverhältnis klein gewählt, wenn nur ein langsamer Stromanstieg zu Beginn des Stromimpulses gewünscht wird. Damit lassen sich durch - während der Impulsdauer variable - Tastverhältnisse neben der Stromform auch die Stromhöhe (Strombegrenzung) einstellen. Versuche in der Praxis mit dem erfindungsgemäßen Generator ergaben gute Ergebnisse bei einer Schaltfrequenz von 500 kHz. Als für diese Schaltfrequenz geeignete Schalter können Leistungs-MOSFETs eingesetzt werden, die sich zur Erhöhung der Strombelastbarkeit problemlos parallelschalten lassen.

Im folgenden wird die Erfindung anhand einer Zeichnung näher erläutert. Im einzelnen zeigen

Fig. 1   ein Prinzipschaltbild eines elektrischen Generators für funkenerosive Metallbearbeitung mit schematischer Darstellung der getakteten Spannung und

Fig. 2   verschiedene Kurvenverläufe (schematisch) des Stromes im Arbeitsspalt.

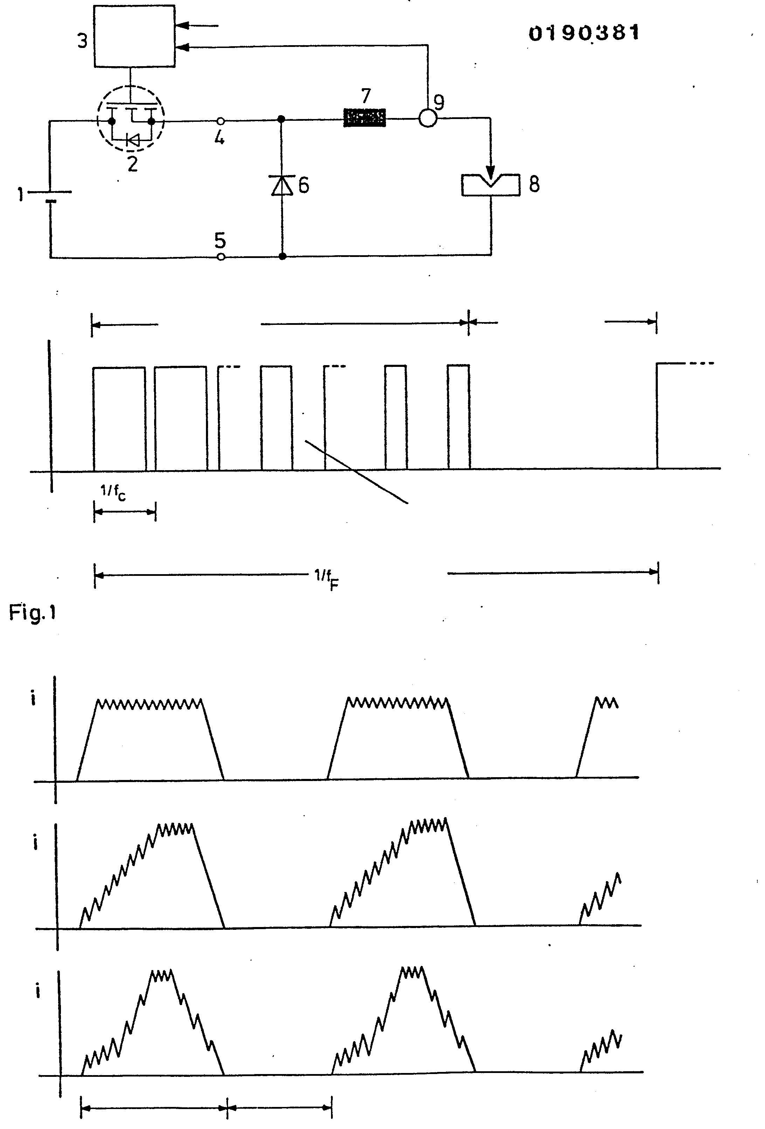

Der Stromversorgungskreis des Generators besteht aus einer Gleichspannungsquelle 1 und einem elektronischen Schalter 2, der von einer Steuereinrichtung 3 derart gesteuert wird, daß an den Klemmen 4, 5 eine impulsförmige Spannung ansteht. Der Strom der Gleichstromquelle gelangt über einen elektronischen Schalter 2, insbesondere einem Leistungs-MOSFET, einer die Leitungsinduktivität 7 zum Arbeitsspalt 8 des zu bearbeitenden Werkstücks. Der Schalter 2 wird von einer Steuereinrichtung 3 mit einer hohen Frequenz in der Größenordnung von 500 kHz getriggert. Das Tastverhältnis, mit dem der Schalter 2 getriggert wird, hängt von dem Strom ab, der über den Arbeitsspalt 8 fließen soll. Der Steuereinrichtung 3 kann zu diesem Zweck ein Sollwert vorgegeben werden, der mit einem Istwert verglichen wird, der von einem Strommesser 9 geliefert wird. Der Steuereinrichtung 3 kann jeder beliebige Stromverlauf vorgegeben werden. Damit bei Unterbrechung der Spannungsimpulse (Sperrzeit) durch den Schalter 2 in der Induktivität 7 keine Spannungsspitzen induziert werden und der Stromfluß während der Impulsdauer aufrechterhalten wird, ist parallel zu der Reihenschaltung aus Induktivität 7 und Arbeitsspalt 8 eine Freilaufdiode 6 geschaltet.

# COHAUSZ & FLORACK

### PATENTANWALTSBÜRO

### SCHUMANNSTR. 97 D-4000 DÜSSELDORF 1

Telefon: (02 11) 68 33 46          Telex: 0858 6513 cop d

PATENTANWALTE:

Dipl.-Ing. W. COHAUSZ · Dipl.-Ing. R. KNAUF · Dipl.-Ing. H. B. COHAUSZ · Dipl.-Ing. D. H. WERNER

– 7 –

Anspruch:

Elektrischer Generator für die funkenerosive Metallbearbeitung, bestehend aus einer Gleichstromquelle und einer Strombegrenzungsschaltung, die aus einer in Reihe mit dem Arbeitsspalt und einem steuerbaren Schalter liegenden Induktivität sowie einer parallel zu dieser Induktivität und dem Arbeitsspalt liegenden Freilaufdiode besteht, wobei der Schalter von einer Steuereinrichtung derart getriggert wird, daß sich ein vorgegebener Stromverlauf im Arbeitsspalt einstellt, d a d u r c h   g e k e n n z e i c h n e t, daß die Induktivität (7) von der Induktivität der Stromzuleitungen gebildet ist und der Schalter (2) als Hochfrequenz-Schalter ausgebildet ist

0190381

Fig.1

Europäisches
Patentamt

**EUROPÄISCHER RECHERCHENBERICHT**

0190381

Nummer der Anmeldung

EP 85 10 1210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| E | DE-A-3 326 866 (AEG ELOTHERM) <br> * Insgesamt * <br><br> --- | 1 | B 23 H 1/02 |
| X | GB-A-2 050 651 (INOUE JAPAX) <br> * Seite 2, Zeile 82 - Seite 3, Zeile 106 * <br><br> ----- | 1 | |

| | RECHERCHIERTE SACHGEBIETE (Int. Cl.4) |
|---|---|
| | B 23 H |

Der vorliegende Recherchenbericht wurde für alle Patentansprüche erstellt.

| Recherchenort <br> DEN HAAG | Abschlußdatum der Recherche <br> 24-09-1985 | Prüfer <br> DAILLOUX C. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82